# EUROPÄISCHE PATENTSCHRIFT

(11) **EP 2 437 925 B1**
(45) Veröffentlichungstag und Bekanntmachung des Hinweises auf die Patenterteilung: **31.07.2013**
(21) Anmeldenummer: 10724465.9
(22) Anmeldetag: 02.06.2010
(51) Int. Cl.: B32B 5/02

(54) **VERFAHREN ZUM HERSTELLEN EINES SICHTBELAGS**
METHOD FOR PRODUCING A VISIBLE COVERING
PROCÉDÉ DE FABRICATION D'UN REVÊTEMENT APPARENT

(30) Priorität: 02.06.2009 DE 102009023421
(43) Veröffentlichungstag der Anmeldung: 11.04.2012
(73) Patentinhaber: Marohn, Holger, 47798 Krefeld (DE)
(72) Erfinder: Marohn, Holger, 47798 Krefeld (DE)
(74) Vertreter: Burrichter, Arwed Andreas
(86) Internationale Anmeldenummer: PCT/EP2010/057701
(87) Internationale Veröffentlichungsnummer: WO 2010/139723

(56) Entgegenhaltungen:
- WO-A1-01/75246
- DE-A1- 19 940 219
- DE-U1-202006 019 074
- GB-A- 1 162 991
- US-A- 5 364 672
- "Kunststein" Wikipedia 5. März 2009 (2009-03-05), XP002602513 Gefunden im Internet: URL:http://de.wikipedia.org/wiki/Kunststei n [gefunden am 2010-09-28]
- "Bindemittel" Wikipedia 5. März 2009 (2009-03-05), XP002603334 Gefunden im Internet: URL:http://de.wikipedia.org/wiki/Bindemitt el [gefunden am 2010-10-04]

## Beschreibung

Die Erfindung betrifft ein Verfahren zum Herstellen eines Sichtbelags, einen mit dem erfindungsgemäßen Verfahren hergestellten Sichtbelag sowie dessen Verwendung als Bekleidung von Decken, Wänden, Fußböden, Türen, Dächern und/oder Tischplatten.

Sichtbeläge der eingangs genannten Art sind grundsätzlich bekannt und werden üblicherweise als dekorative Oberflächen bei Fußböden, Decken, Möbeln und dergleichen eingesetzt.

Die Sichtbeläge können aus den verschiedensten Materialien, beispielsweise Natursteinen, wie Schiefer, Marmor, Granit, oder keramischen Materialien bestehen. Vorteilhaft an diesen Materialien sind ihr dekoratives Aussehen und ihre Verschleißfestigkeit.

Nachteilig ist jedoch, dass diese Materialien meist spröde, schwer und unflexibel sind, was ihre Einsatzmöglichkeit für verschiedene Anwendungen begrenzt. Darüber hinaus ist die Befestigung dieser Materialien auf dem Untergrund meist kostenintensiv und nur unter Einsatz von schweren Baustoffen, wie Mörtel, Zement oder ähnlicher Materialien möglich. Ein weiterer Nachteil dieser Materialien besteht darin, dass die Untergründe, auf denen sie befestigt werden, hohen Ansprüchen im Hinblick auf Stabilität und Biegefestigkeit entsprechen müssen. So ist es beispielsweise nur schwer möglich, Natursteine auf Holzkonstruktionen aufzubringen, da diese sich aufgrund von Schwankungen von Temperatur und/oder Feuchtigkeit ausdehnen, zusammenziehen oder durchbiegen, was mit der Zeit zu Beschädigungen wie beispielsweise Rissen in den Materialien führen kann.

Es ist bekannt, Natursteinlaminate, wie beispielsweise Sandsteinlaminate, in Sandgruben durch Einebnen der Sandwände, Applizieren einer Rückseitenverstärkung auf den Wänden und abschließenden Auftrag eines Dispersionsbinders zu gewinnen. Nach dem Auftrocknen bzw. Polymerisieren des Dispersionsbinders wird das entstandene Laminat abgenommen. Auf der Sichtseite des Laminats sind Farbe und Topographie der Wand abgeformt.

Ein wesentlicher Nachteil dieses Verfahrens besteht darin, dass es stark witterungsabhängig ist. So kann bei kalter Witterung auch bei Überdachung der abzubauenden Fläche das Laminat nicht ohne Qualitätseinbuße gewonnen werden. Hinzukommt noch, dass in diesem Fall wesentlich längere Trocken- und Aushärtungszeiten notwendig sind.

Ein weiterer nachteiliger Witterungseinfluss ist Regen. Bei Regen nimmt der Boden Wasser auf, was sich an den Abbauflächen durch eine Erhöhung der Eigenfeuchte bis hin zu schleierartigen Wasserabläufen bemerkbar macht. Dies wiederum führt zu gravierenden Fehlstellen im Laminat bis hin zu seiner völligen Unbrauchbarkeit.

Weiter nachteilig ist auch die unterschiedliche Festigkeit der abzubauenden Fläche. Diese ist, abhängig von den geologischen Gegebenheiten, stark schwankend und erfordert eine ständige Anpassung der Klebstoffe und Bindemittel. Schließlich ist es mit diesem Verfahren - auch bei Einsatz starker Klebe- bzw. Bindemittel - nicht möglich harte Natursteinsorten wie beispielsweise Granit und Marmor abzubauen.

Es wurde bereits versucht, die vorgenannten Probleme dadurch zu lösen, dass dünne Scheiben aus Steinmaterialien geschnitten und auf einen Träger, wie beispielsweise ein metallisches Substrat, geklebt wurden. Nachteilig an dieser Vorgehensweise ist jedoch, dass das Herausschneiden dünner Lagen schwierig zu bewerkstelligen und zudem zeitaufwändig ist. Ferner sind die erhaltenen Schichtprodukte meist spröde und brüchig, so dass ihre Einsatzmöglichkeiten begrenzt sind.

Aus der WO 2008/022812 ist ein flexibles Flachmaterial bekannt, das eine Oberflächenschicht mit einer Lage eines mehrlagigen Steinmaterials umfasst, eine flexible, zugfähige Trägerschicht, welche die Oberflächenschicht trägt, und eine Klebeschicht zur Befestigung des Flachmaterials auf dem Untergrund.

Aus der WO 01/75246 A1 ist ferner ein Verfahren zur Herstellung von verfestigten Sandschichten bekannt, in dem Schichtbahnen aus einer Sandschicht und einer Stützschicht gebildet werden. In diesem Verfahren wird eine Stützschicht auf eine geglättete Sandfläche aufgelegt, die Stützschicht mit einem die obere Sandschicht verfestigenden Binde- bzw. Klebemittel in Kontakt gebracht und die jeweils fertiggestellte Schichtbahn anschließend abgehoben.

Um die Strukturierung der Sandschicht vor dem Abnehmen der Schichtbahn zu sichern, wird vorgeschlagen, die Sandfüllung mit Wänden zu umschließen.

Nachteilig an dieser Vorgehensweise ist, dass eine Umschließung der Sandfüllung mit Wänden nur begrenzt dazu geeignet ist, die Strukturierung des Sandes zuverlässig zu sichern. Sand neigt nämlich aufgrund seiner Feinkörnigkeit dazu, bei Erschütterungen zu rieseln, wobei seine ursprüngliche Strukturierung verloren gehen kann.

Die DE 20 2006 019 074 U1 beschreibt ein flexibles Flachmaterial mit einer Natursteinoberfläche. Das Flachmaterial weist eine Oberflächenschicht auf, welche mindestens eine Lage eines mehrlagigen Steinmaterials umfasst; eine flexible, zugfähige Trägerschicht, welche die Oberflächenschicht trägt, sowie eine Klebeschicht zur Befestigung des Flachmaterials auf einem Untergrund. Die DE 199 40 219 A1 beschreibt die Herstellung und Verarbeitung eines bahnenmäßigen dünnen nicht aufrollbaren freihängenden Kunststeinbelages mit rückseitiger Gewebearmierung. Der Steinbelag ist dadurch gekennzeichnet, dass er ein flächiger freihängender dünner selbsttragender mit Rissen und Fugen versehener Kunststeinbelag ist und des Weiteren durch seine Rückseite, die mit einem Vlies oder naturbelassenen Gewebe armiert wurde, sowie dass er nicht aufrollbar sondern als plastisches zweischichtiges Laminatgebilde zusammenlegbar ist. Aus der GB1 162 991 ist ein Kunststeinlaminat aus einer Trägerschicht und mittels einer Klebeschicht mit dieser verbundenen Steinmischungszusammensetzung bekannt. Die US5364672 beschreibt Kunststeine aus feinteiligem Glasbruch und Kunstharzen.

Aufgabe der Erfindung war es, die vorgenannten Nachteile im Stand der Technik zu überwinden.

Diese Aufgabe wird durch ein Verfahren zum Herstellen eines Sichtbelags gelöst, das folgende Schritte umfasst:
a) Vermengen eines schwachen Stabilisierungsmittels, ausgewählt aus Wasser, Quellton, Methylcellulose, Polysaccharide, Polyvinylalkohol, Kasein, Lehm, Saponite, Sephiolit, China-clay, Zinkoxid und/oder Wasserglas mit einem körnigen Material (2), ausgewählt aus Naturstein, vorzugsweise Quarz, Quarzsand, Sandstein, Granit, Schiefer, Marmor, Tuffstein, Glas, Kunststoff, Holz und/oder Metall;
b) Einfüllen des körnigen Materials (2) in eine Aufnahme (3) unter Ausbildung eines Formkörpers (4),
c) Ausbilden mindestens einer Ausnehmung (5) in dem Formkörper (4);
d) Verfüllen zumindest eines Teils der Ausnehmung (5) mit einem Kontrastmittel (8), wobei sich ein künstliches Strukturmuster ausbildet;
e) Verbinden mindestens einer Oberflächenschicht (9) des Formkörpers (4) mit einer Trägerschicht (10), ausgewählt aus Gewebe, ein Vlies und/oder ein Gewirke;
f) Abheben des Verbunds aus Oberflächenschicht (9) und Trägerschicht (10), wobei der Sichtbelag (1) erhalten wird.

Das erfindungsgemäße Verfahren zeichnet sich gegenüber dem Stand der Technik insbesondere dadurch aus, dass das körnige Material mit einem Stabilisierungsmittel vermengt und anschließend mit einer Trägerschicht verbunden wird. Das Einbringen des Stabilisierungsmittels führt zu einer Erhöhung der Formstabilität des körnigen Materials, wodurch seine Strukturierung auch bei Erschütterungen beispielsweise bei Lagerung und Transport gesichert werden kann. Auf diese Weise kann eine gewünschte Strukturierung in dem körnigen Material vorgegeben, konserviert und bei Bedarf auf den Sichtbelag übertragen werden.

Das erfindungsgemäße Verfahren zeichnet sich ferner dadurch aus, dass mit einer vergleichsweise geringen Menge an körnigem Material ein Sichtbelag mit durchgehend dekorativer Sichtoberfläche hergestellt werden kann. So werden mit dem erfindungsgemäßen Verfahren die vorhandenen Ressourcen besonders effektiv ausgenutzt. Dieser Vorteil ist insbesondere beim Einsatz von teuren und/oder selten vorkommenden Materialien von Bedeutung.

Ein weiterer Vorteil des erfindungsgemäßen Verfahrens liegt darin, dass es die serienmäßige Herstellung von Sichtbelägen in einer von Witterungseinflüssen unabhängigen Atmosphäre ermöglicht. Darüber hinaus können mit dem erfindungsgemäßen Verfahren Sichtbeläge in gleichbleibender Qualität produziert werden, was insbesondere dann von Vorteil ist, wenn Qualitätsnormen, wie beispielsweise in der Gebäudebeschichtung, einzuhalten sind.

Im ersten Schritt des erfindungsgemäßen Verfahrens wird ein körniges Material mit einem Stabilisierungsmittel vermengt.

Als körniges Material werden Naturstein, vorzugsweise Sandstein, Quarz, Quarzsand, Granit, Schiefer, Marmor, Glas, Tuffstein, Shungit, Quarzit, Kunststoff, vorzugsweise Acrylate, Polyamide, Holz und/oder Metall, vorzugsweise nicht korrodierende Metalle, insbesondere Kupfer, Bronze, Messing, Aluminium eingesetzt.

Der Einsatz eines Granulats als körniges Material ist besonders zweckmäßig, da Granulate eine gute Schüttbarkeit aufweisen und einfach handhabbar sind. Praktische Versuche haben ergeben, dass mit Granulaten, die einen D₅₀-Wert von 0,01 mm bis 5 mm, vorzugsweise von 0,02 mm bis 1 mm und/oder eine mittlere Korngröße von 0,05 mm bis 5 mm, vorzugsweise von 0,1 bis 1,5 mm aufweisen, besonders gute Ergebnisse erzielt werden können.

Grundsätzlich können körnige Materialien mit einem beliebigen Sieblinienaufbau eingesetzt werden. Besonders vorteilhaft ist jedoch die Verwendung eines körnigen Materials mit einem Sieblinienaufbau, der die Bildung eines dichten Materialgefüges ermöglicht ohne dass eine große Verdichtungsenergie aufgebracht werden muss. Welcher Sieblinienaufbau sich für das jeweils eingesetzte körnige Material eignet, kann von dem Fachmann durch einfache Versuche herausgefunden werden.

Praktische Versuche haben ergeben, dass bei der Verwendung von Mehlen, Sanden, Kiesen und/oder Gemischen hiervon als körniges Material besonders gute Ergebnisse erzielt werden. Besonders gute Ergebnisse werden mit Mehlen, Sanden, Kiesen und/oder Gemischen hiervon erzielt, die folgende mittlere Korngrößen aufweisen:

| | |
|---|---|
| Mehle: | 20-100 µm |
| Sande: | 50-1000 µm |
| Kiese: | 0,1-5,0 mm, vorzugsweise 0,1-1,5 mm. |

Zur Verbesserung der Eigenschaften des erfindungsgemäßen Sichtbelags kann das körnige Material ferner Hilfsmittel wie Brandschutzadditive, Hydrophobierungsmittel, Geruchs- und/oder Schadstoffadsorbentien, vorzugsweise Titandioxid, und/oder Färbemittel, vorzugsweise Pigmente, enthalten.

Besonders bevorzugt ist die Verwendung eines körnigen Materials, dem vorzugsweise während der Herstellung, UVwirksame TiO₂-Verbindungen, beispielsweise in Form von Pulvern oder Sol-Lösungen beigemischt werden. Wird der Sichtbelag als Außenwandverkleidungen eingesetzt, bewirkt die Zugabe bei Sonnenlicht (UV) eine Zersetzung organischer Partikel d.h. Moos, Algen, Verkeimungen etc können zerstört und abgewaschen werden. Als Folge hiervon kann ein Sichtbelag mit dauerhaft sauberer Oberfläche erhalten werden.

Das körnige Material kann ferner ein Verstärkungsmaterial enthalten. Als Verstärkungsmaterial können beispielsweise hochfeste Fasern eingesetzt werden. Hochfeste Fasern sind bekannt und umfassen organische und anorganische, verstärkende Fasern, wie z.B. Glasfasern, Kohlenstofffasern, Kevlar-Fasern, Baufasern und dergleichen. Die Fasern können als geschnittene Einzelfasern vorliegen. Hierbei ist es von Vorteil, wenn die Länge der Einzelfasern nicht größer als das Größtkorn des körnigen Materials ist. Auch denkbar ist, dass die Fasern, in Form eines gewebten oder nicht gewebten Stoffes, in Form einer Matte, in Form einer Lage von im Wesentlichen kontinuierlichen Filamenten, in Form einer Litze oder eines Strangs von Fasern vorliegen.

Das körnige Material wird erfindungsgemäß mit einem Stabilisierungsmittel vermengt. Unter Stabilisierungsmittel werden erfindungsgemäß Substanzen verstanden, die dazu geeignet sind, das körnige Material zumindest temporär in seiner Struktur zu sichern. Als Stabilisierungsmittel können grundsätzlich die verschiedensten Substanzen eingesetzt werden. Durch die Auswahl des Stabilisierungsmittels kann das Ausmaß der Struktursicherung des körnigen Materials gezielt eingestellt werden.

Welches Stabilisierungsmittel sich bei dem jeweils eingesetzten körnigen Material zur Erzielung einer erwünschten Stabilisierung eignet, kann von dem Fachmann durch einfache Versuche herausgefunden werden. Für die meisten Anwendungszwecke besonders geeignete Stabilisierungsmittel sind Split und/oder Wasser.

Ein wesentliches Kriterium für die Auswahl des Stabilisierungsmittels ist das Ausmaß seiner stabilisierenden Wirkung. Erfindungsgemäß wird ein Stabilisierungsmittel mit einer schwach stabilisierenden Wirkung ingesetzt. Vorteilhaft am Einsatz eines schwachen Stabilisierungsmittels ist, dass die Strukturierung des körnigen Materials veränderlich bleibt. So ist es beim Einsatz eines schwachen Stabilisierungsmittels möglich, eine unerwünschte Strukturierung auch nach dem Vermengen mit dem Stabilisierungsmittel noch abzuändern.

Erfindungsgemäß besonders geeignete schwache Stabilisierungsmittel sind Wasser, Quellton, Methylcellulose, Polysaccharide, Polyvinylalkohol, Kasein, Lehm, Saponite, Sephiolit, China-clay, Zinkoxid und/oder Wasserglas.

In manchen Fällen ist es wünschenswert, die Struktur des körnigen Materials nur temporär zu sichern. Zu diesem Zweck kann ein Stabilisierungsmittel eingesetzt werden, dessen stabilisierende Wirkung reversibel ist. Unter einem reversiblen Stabilisierungsmittel wird erfindungsgemäß ein Stabilisierungsmittel verstanden, dessen stabilisierende Wirkung wieder aufgehoben werden kann.

Geeignete reversible Stabilisierungsmittel sind beispielsweise Wasser, Cellulose, Stärke, Saccharid, Polyvinylalkohol, Kasein, Quellton.

Durch welche Maßnahmen die stabilisierende Wirkung reversibler Stabilisierungsmittel aufgehoben werden kann, hängt von der Art des jeweils eingesetzten Stabilisierungsmittels ab und ist dem Fachmann bekannt. Wird beispielsweise Wasser als reversibles Stabilisierungsmittel eingesetzt, so kann dessen stabilisierende Wirkung auf einfache Weise durch Trocknen wieder aufgehoben werden. Die stabilisierende Wirkung von Bindemitteln wie Cellulose, Stärke und/oder Saccharid kann durch Zugabe von Lösungsmitteln wie beispielsweise Wasser aufgehoben werden.

Vorteilhaft am Einsatz eines reversiblen Stabilisierungsmittels ist, dass es die Vorteile schwacher und starker Stabilisierungsmittel in sich vereint. So ist es bei der Verwendung eines reversiblen Stabilisierungsmittels möglich, eine im körnigen Material vorgegebene Strukturierung auch nach dem Vermengen mit dem Stabilisierungsmittel zu verändern. Dennoch kann eine dauerhafte Sicherung der Strukturierung erzielt werden. Ferner kann eine Erhärtung des Stabilisierungsmittels, beispielsweise wenn die Oberfläche des Formkörpers für die Abnahme des Sichtbelags zu hart und/oder die Dicke der Oberflächenschicht in unerwünschter Weise ungleichmäßig ist, wieder rückgängig gemacht werden.

Besonders zweckmäßig ist es, wenn als Stabilisierungsmittel ein Klebe- und/oder Bindemittel eingesetzt wird, dessen Wirkstoff für die Innen- und Außenanwendung geeignet ist.

Der erfindungsgemäße Einsatz eines Stabilisierungsmittels ermöglicht ferner die Ausbildung mindestens einer Ausnehmung, beispielsweise eines Risses oder eine Furche, in dem Formkörper. Vorteilhaft an dem Einsatz des Stabilisierungsmittels ist hierbei, dass es die gebildete Ausnehmung stabilisiert und somit verhindern kann dass sich die Ausnehmung in unerwünschter Weise wieder verfüllt. Anschließend wird erfindungsgemäß zumindest ein Teil der Ausnehmung mit einem Kontrastmittel füllt, wobei sich ein künstliches Strukturmuster ausbildet.

Hierdurch kann ein besonders dekorativer Sichtbelag mit einem künstlichen Strukturmuster hergestellt werden.

Die Ausbildung der Ausnehmung kann auf die verschiedensten Weisen durchgeführt werden. Besonders gute Ergebnisse werden erzielt, wenn die Ausnehmung durch eine Veränderung der räumlichen Stellung des Formkörpers gebildet wird. Eine derartige Veränderung kann beispielsweise durch Klopfen und/oder Schütteln der Aufnahme, bewirkt werden.

Gemäß einer weiteren bevorzugten Ausführungsform der Erfindung wird die Ausnehmung in dem Formkörper durch eine Verformung der Bodenfläche der Aufnahme und/oder durch eine Verformung einer zwischen Bodenfläche der Aufnahme und Formkörper angeordneten Folie gebildet wird. Zu diesem Zweck kann die Bodenfläche der Aufnahme und/oder die Folie zumindest partiell verformbar ausgestaltet werden. Mit dieser Maßnahme können besonders attraktive Ergebnisse erzielt werden.

Die Verformung der Bodenfläche und/oder der Folie kann auf verschiedene Weisen erfolgen. Gute Ergebnisse werden mit einem punktuellen, beispielsweise seitlichen, Anheben der Bodenfläche erzielt.

Gemäß einer besonders bevorzugten Ausführungsform der Erfindung wird die Verformung der Bodenfläche und/oder der zwischen Bodenfläche der Aufnahme und Formkörper angeordneten Folie durch Eindrücken eines Eindrückkörpers in die Bodenfläche des Formkörpers und/oder in die Folie durchgeführt. Der Eindrückkörper kann hierbei im Wesentlichen formstabil oder auch verformbar sein. Besonders geeignet ist zu diesem Zweck das Eindrücken eines verformbaren Festkörpers, vorzugsweise in die dem Formkörper abgewandte Seite der Bodenfläche.

Die mit den vorgenannten Verfahren gebildete Ausnehmung wird erfindungsgemäß mit einem Kontrastmittel versehen, wobei ein künstliches Strukturmuster entsteht. Dieses Strukturmuster verleiht dem erfindungsgemäßen Sichtbelag ein besonders natürliches Erscheinungsbild.

Das Erscheinungsbild des künstlichen Strukturmusters wird wesentlich durch die Form und Anzahl der Ausnehmungen bestimmt und kann insbesondere durch die Art und Weise beeinflusst werden, in der die räumliche Stellung des Formkörpers verändert bzw. dessen Bodenfläche verformt wird. Der Fachmann kann durch einfaches Ausprobieren herausfinden, mit welchen Maßnahmen er ein erwünschtes Strukturmuster erhalten kann.

Einen weiteren wesentlichen Faktor für das Erscheinungsbild des künstlichen Strukturmusters stellt die Wahl des Kontrastmittels da. Unter dem Begriff Kontrastmittel werden erfindungsgemäß Materialien verstanden, die sich in optischer und/oder haptischer Hinsicht von dem körnigen Material unterscheiden.

Grundsätzlich können als Kontrastmittel die gleichen Materialien wie für das körnige Material eingesetzt werden, sofern sie sich optisch und/oder haptisch von dem körnigen Material unterscheiden. Dieser Unterschied kann beispielsweise durch eine Verschiedenheit in Farbe, Struktur, Zusammensetzung, Korngröße und/oder Sieblinienaufbau hervorgerufen werden. Mit einem farblichen Kontrast zwischen dem körnigen Material und dem Kontrastmittel können besonders attraktive Ergebnisse erzielt werden. Ein farblicher Kontrast kann hierbei sowohl durch eine unterschiedliche Zusammensetzung der Materialien als auch durch Einsatz von Färbemitteln wie Farben und Pigmenten erzielt werden.

Die Verwendung fester Materialien als Kontrastmittel ist erfindungsgemäß aus praktischen Aspekten bevorzugt. Grundsätzlich können aber auch Flüssigkeiten eingesetzt werden, sofern sich diese verfestigen lassen.

Das Kontrastmittel kann ferner zur Verbesserung der Eigenschaften des Sichtbelags Hilfsmittel wie Brandschutzadditive, Hydrophobierungsmittel, Geruchs- und/oder Schadstoffadsorbentien, vorzugsweise Titandioxid, und/oder Färbemittel, vorzugsweise Pigmente, enthalten.

In Schritt b) des erfindungsgemäßen Verfahrens wird das körnige Material in eine Aufnahme eingebracht. Es ist erfindungsgemäß bevorzugt Verfahrensschritt b) im Anschluss an Verfahrensschritt a) durchzuführen. Diese Vorgehensweise weist den Vorteil auf, dass das Vermengen von körnigem Material und Stabilisierungsmittel in besonders einfacher Weise beispielsweise in handelüblichen Mischautomaten durchgeführt werden kann. Bei dieser Reihenfolge ist darauf zu achten, dass das körnige Material trotz Vermengen mit dem Stabilisierungsmittel verfüllbar bleibt. Eine solche Verfüllbarkeit kann beispielsweise durch den Einsatz eines nur schwach stabilisierenden Stabilisierungsmittels und/oder durch die Verwendung eines Stabilisierungsmittels mit zeitlich verzögerter Wirkung gewährleistet werden.

In manchen Fällen ist es günstiger, Verfahrensschritt a) im Anschluss an den Verfahrensschritt b) durchzuführen. In diesem Fall wird zunächst das körnige Material in die Aufnahme eingefüllt und anschließend zumindest ein Teil des körnigen Materials mit dem Stabilisierungsmittel versehen. Diese Vorgehensweise ist-insbesondere dann bevorzugt, wenn stark und/oder schnell verfestigende Stabilisierungsmittel eingesetzt werden.

Wird der Verfahrensschritt b) vor dem Verfahrensschritt a) durchgeführt, kann es zweckmäßig sein nur einen Teil des körnigen Materials zu verfestigen. Der verfestigte Anteil des körnigen Materials bildet in diesem Fall vorzugsweise die Oberflächenschicht. Die Dicke und Festigkeit der Oberflächenschicht kann hierbei auf einfache Weise über die Viskosität des eingesetzten Stabilisierungsmittels beeinflusst werden. So dringen Bindemittel bzw. Klebstoffe mit einer hohen Viskosität weniger tief in den Formkörper ein als Bindemittel bzw. Klebstoffe mit niedrigerer Viskosität. Darüber hinaus kann die Dicke und Festigkeit der verfestigten Oberflächenschicht auch durch Auswahl von Art und Menge des Stabilisierungsmittels gesteuert werden.

Praktische Versuche haben ergeben, dass besonders dekorative Sichtbeläge erhalten werden können, wenn der Formkörper unter Verwendung eines körnigen Materials ausgebildet wird, das mindestens zwei Komponenten enthält, die sich optisch, vorzugsweise farblich, voneinander unterscheiden. So ermöglicht es die Verwendung eines körnigen Materials, das farblich unterscheidbare Komponenten enthält, in dem Formkörper Muster vorzubilden, die dem Sichtbelag ein individuelles, dekoratives Aussehen verleihen. Mit dieser Ausführungsform können sowohl natürliche Maserungen nachgeahmt als auch künstliche Muster erschaffen werden.

Wie bereits oben dargelegt, ist es von Vorteil, wenn die Aufnahme eine zumindest partiell verformbare Bodenfläche aufweist. Die Verformbarkeit der Bodenfläche kann beispielsweise durch Verwendung eines flexiblen Materials als Bodenfläche erzielt werden. Besonders gute Ergebnisse werden mit Bodenflächen aus Metall und/oder Kunststoff, vorzugsweise Polyurethan, Polyvinylchlorid und/oder Silikon erzielt. Diese Materialien können beispielsweise in Form einer elastischen Matte bzw. einer elastischen Bahn eingesetzt werden.

Wird eine stabilere Bodenfläche gewünscht, so kann dies durch Auswahl eines formstabileren Materials und/oder durch Einbringen von Füllstoffen in die Bodenfläche erreicht werden. Alternativ oder zusätzlich kann die Bodenfläche auch eine Verstärkungseinlage umfassen.

Es ist ferner von Vorteil, wenn die Aufnahme neben einer Bodenfläche mindestens eine Wand umfasst. Sowohl Bodenfläche als auch Wand werden zweckmäßigerweise wenigstens innenseitig überwiegend glattflächig ausgebildet. Auf diese Weise können unerwünschte Unregelmäßigkeiten im Aufbau des Sichtbelags vermieden werden.

Praktische Versuche haben gezeigt, dass es besonders zweckmäßig ist, wenn auf den Wänden und/oder der Bodenfläche der Aufnahme eine Folie, vorzugsweise aus Latex, Polyisobutylen, Polyethylen, Silikon, Polyurethan, Urea und/oder in Form von Recyclingmatten, als Trenn- und/oder Gleitschicht angeordnet ist.

Sind Wände in der Aufnahme vorgesehen, so bilden diese vorzugsweise einen geschlossenen Rahmen. Dieser Rahmen kann die verschiedensten Formen aufweisen. Als besonders zweckmäßig haben sich Rahmen in rechteckiger und quadratischer Form erwiesen.

Die Abmessungen der Aufnahme richten sich nach der erwünschten Größe des Sichtbelags. Praktische Versuche haben gezeigt, dass Aufnahmen, die eine rechteckige oder quadratische Bodenfläche mit Abmessungen von 1 bis 5 m, vorzugsweise 2 bis 4 m, mal 0,3 bis 3 m, vorzugsweise 0,6 bis 2 m und eine Höhe von 0,05 bis 0,8 m, vorzugsweise 0,1 bis 0,5 m, aufweisen, besonders gute Ergebnisse erzielen.

Weiter vorteilhaft ist es, wenn die Aufnahme während des Einbringens des körnigen Materials in Füllrichtung offen und nach Beendigung des Füllvorgangs, beispielsweise bei Transport und/oder Lagerung, zumindest im unteren und seitlichen Bereich der Aufnahme geschlossen vorliegt.

Gemäß einer weiteren bevorzugten Ausführungsform der Erfindung ist die Aufnahme in einer Weise ausgebildet, die es ermöglicht, die gesamte Bodenfläche der Aufnahme in Füllrichtung anzuheben. Diese Ausführungsform ist insbesondere von Vorteil wenn der Füllkörper schichtweise abgetragen wird.

Bei einem schichtweisen Abtragen des körnigen Materials kann jede neu abgetragene Schicht in seiner Strukturierung der vorangegangenen Schicht entsprechen. Dies ermöglicht es, beispielsweise wie bei Tapeten, sich in Struktur ergänzende Bahnen in einer Folge aneinander zu reihen.

In Schritt e) des erfindungsgemäßen Verfahrens wird mindestens eine Oberflächenschicht des Formkörpers mit einer Trägerschicht verbunden.

Unter Oberflächenschicht wird erfindungsgemäß eine Schicht des Formkörpers verstanden, die diejenige Oberfläche des Formkörpers umfasst, die der Bodenfläche der Aufnahme abgewandt ist. Die Oberflächenschicht kann sowohl nur einen Teil des Formkörpers als auch den gesamten Formkörper umfassen.

Als Trägerschicht können erfindungsgemäß die verschiedensten Materialien in Form eines Gewebes, eines Vlieses und/oder eines Gewirkes eingesetzt werden. Zweckmäßig ist insbesondere die Verwendung einer porösen Trägerschicht. In diesem Fall kann das Verbinden von Trägerschicht und Oberflächenschicht besonders einfach mit einem Binde- und/oder Klebemittel durchgeführt werden. Hierzu kann die Trägerschicht zunächst auf die Oberflächenschicht aufgebracht und anschließend ein Binde- und/oder Klebemittel auf die der Oberflächenschicht abgewandte Seite der Trägerschicht aufgebracht werden. In diesem Fall kann das Binde- und/oder Klebemittel die Trägerschicht durchdringen und den Verbund zwischen Oberflächenschicht und Trägerschicht ausbilden. Hierbei wird eine besonders gute Verbundhaftung erzielt.

Von Vorteil ist auch der Einsatz einer flexiblen Trägerschicht. In diesem Fall wird ein flexibler Sichtbelag erhalten, der problemlos auch auf unebenen Oberflächen, Ecken und/oder Kanten eines Untergrunds aufgebracht werden kann.

Erfindungsgemäß wird ein Gewebe, ein Vlies und/oder ein Gewirke als Trägerschicht eingesetzt. Ist eine höhere Festigkeit der Trägerschicht erwünscht, so kann diese zusätzlich ein Verstärkungsmaterial, wie beispielsweise Verstärkungsfasern, enthalten. Um die Härte des Sichtbelags zu erhöhen, kann ferner auf die der Oberflächenschicht abgewandte Seite der Trägerschicht eine Versteifungsschicht, wie beispielsweise eine Span- und/oder MDF-Platte, aufgebracht werden.

Das Verbinden von Oberflächenschicht und Trägerschicht kann auf verschiedene Arten und Weisen, vorzugsweise unter Einsatz eines Klebe- und/oder eines Bindemittels, durchgeführt werden. Eine für den Einsatz einer porösen Trägerschicht besonders günstige Methode wurde bereits diskutiert.

Die Zweckmäßigkeit der verschiedenen Methoden hängt insbesondere von der Wahl des Trägerschichtmaterials und von dem zum Stabilisieren der Oberflächenschicht eingesetzten Stabilisierungsmittel ab.

Wird ein starkes Stabilisierungsmittel eingesetzt, so entsteht bereits in Schritt a) des erfindungsgemäßen Verfahrens eine verfestigte Oberflächenschicht. Diese kann auf einfache Weise beispielsweise über ein Klebemittel, wie beispielsweise einen Klebstoff, mit der Trägerschicht verbunden werden. Die Verwendung von Klebstoffen ist aufgrund ihrer leichten Handhabbarkeit und guten Dosierbarkeit besonders zweckmäßig.

Ein erfindungsgemäß besonders geeigneter Klebstoff ist ein Kunstharz. Das Kunstharz kann ein thermoplastisches oder wärmehärtendes Kunstharz sein. Zu den geeigneten Polymeren zur Herstellung des Kunstharzes gehören gesättigte und ungesättigte Polyolefine, wie z.B. Polyethylen und Polypropylen, Vinylpolymere und -Copolymere, wie z.B. Polyvinylchlorid (PVC), Polystyrol und dergleichen; Acrylatpolymere, wie z.B. Polymere und Copolymere der Acryl- und der Methacrylsäure sowie deren Amide, Ester, Salze und entsprechende Nitrile; Polyamide; Polyester; Epoxydharze; Polyurethane; Gemische und Copolymere dieser und weiterer thermoplastischer und wärmehärtender Polymere, wie z.B. Acrylonitrilbutadienstyrol (ABS); und dergleichen.

Erfindungsgemäß besonders geeignete Polyesterpolymere sind Polykondensationsprodukte einer Dicarboxylsäure mit einem Dihydroxyalkohol. Diese Produkte können aus einer Anzahl von Ausgangsreagenzien erhalten werden, zu denen folgende Stoffe gehören: Maleinsäure, Fumarinsäure, Phtalsäure, Isophthalsäure, Terephtalsäure, Adipinsäure und andere Säuren und deren Anhydride sowie Ethylen, Propylen, Diethylen, Dipropylen, 1,4-Butylen und Hexamethylenglycol und dergleichen.

Besonders geeignete Acrylatpolymere sind Methylmetacrylat, Ethylacrylat und Acrylnitril. Die Polymere können jeweils in Form der Homopolymere oder mit verschiedenen anderen Monomeren verwendet werden, die damit eine Copolymerisation ermöglichen. Zusätzliche erläuternde Beispiele für Acrylatpolymere, die für die vorliegende Erfindung nützlich sind, sind Polyacrylate und Polymethacrylate, bei denen es sich um Homopolymere oder Copolymere eines Acrylsäureesters bzw. eines Methacrylsäureesters handelt, wie z.B. einen Polyacrylsäureisobuthylester, einen Polymethacrylsäuremethylester, einen Polymethacrylsäureethylhexylester, einen Polyacrylsäureethylester, Copolymere der verschiedenen Acryl- und/oder Methacrylsäureester, wie z.B. Methacrylsäuremethylester / Acrylsäurecyclohexylester-Copolymere sowie Copolymere von Acrylsäureestern und/oder mit Acrylsäureestern mit Styrol und/oder Alphamethylstyrol, wie z.B. den Propolymeren und -copolymeren und Polymergemischen, die aus Acrylsäureestern, Methacrylsäureestern, Styrol und Butadien zusammengesetzt sind.

Urethanpolymere, die bei der Realisierung der vorliegenden Erfindung nützlich sind, werden hergestellt, indem man ein Polyisocyanat, wie z.B. Toluoldiisocyanat, Diphenylmethandiisocyanat und Hexamethylendiisocyanat mit einer Verbindung reagieren lässt, die mindestens zwei aktive Wasserstoffatome aufweist, wie z.B. Polyol, Polyamin und/oder Polyisocyanat. Zahlreiche Polyurethanharze, die für die Realisierung der Erfindung nützlich sind, sind verfügbar.

Es können auch verschiedene Epoxydharze verwendet werden, die hergestellt werden, indem man eine Epoxidgruppe (die sich aus der Vereinigung eines Sauerstoffatoms mit zwei weiteren Atomen, üblicherweise Kohlenstoff ergibt), wie z.B. Epichlorhydrin, oder oxydierte Polyolefine, wie z.B. Ethylenoxyd, mit einem aliphatischen oder aromatischen Alkohol, wie z.B. Bisphenol A, Glycerol usw., zur Reaktion bringt.

Weiterhin können auch Klebemittel aus Vinylpolymeren verwendet werden, wie sie aus dem Stand der Technik bekannt sind, wie z.B. Polyvinylchlorid, Polyvinylacetat, Polyvinylidenchlorid, Polyvinylalkohol, Polyvinylacetate, Polyvinyläther; Polystyrole und Copolymere dieser Stoffe.

Die genannten Klebstoffe bzw. Bindemittel können im erfindungsgemäßen Verfahren auch als Stabilisierungsmittel Verwendung finden.

Praktische Versuche haben ergeben, dass mit ThermoplastDispersionen, vorzugsweise auf Basis von Acrylat, Styrolacrylat, Propiophan, Elastomeren und/oder Duroplasten, vorzugsweise MS-Polymeren, Polysulfiden, Epoxiden, Polyurethanen und/oder Polyestern besonders gute Ergebnisse erzielt werden. Ebenfalls hervorragend geeignet sind Isocyanat-Prepolymere, Polymethylmethacrylate und/oder Gemische hiervon.

Je nach Anwendung kann es sinnvoll sein, eine beim Verbund von Oberflächenschicht und Trägerschicht gebildete Klebeschicht beispielsweise mit einem Gitter zu verstärken.

Wird als Stabilisierungsmittel ein schwaches und/oder reversibles Stabilisierungsmittel eingesetzt, so ist es erfindungsgemäß von Vorteil, den Verbund von Oberflächenschicht und Trägerschicht mit einem Bindemittel zu erzielen. Das Bindemittel erfüllt in diesem Fall zwei Funktionen. Zum einen durchdringt es eine Oberflächenschicht des Formkörpers und verfestigt diese. Zum anderen erzeugt es den Verbund von Oberflächenschicht und Trägerschicht. Zu diesem Zweck besonders geeignete Bindemittel sind beispielsweise Thermoplastdispersionen auf Basis von Acrylat, Styrolacrylat, Propiophan, Elastomere und Duroplaste, wie insbesondere MS-Polymere, Polysulfide, Epoxide, Polyurethane, Polyester.

Zusätzlich kann auf die der Oberflächenschicht abgewandte Seite der Verstärkungsschicht eine Klebstoffschicht zur Befestigung des Sichtbelags auf einem Untergrund aufgebracht werden. Die Klebstoffschicht ist vorteilhafterweise mit einer Schutzschicht versehen, die bei Bedarf einfach abgezogen werden kann. Die Klebstoffschicht kann mit einer geeigneten Folie oder einem ähnlichen Belag als Abdeckmaterial abgedeckt sein, so dass der Sichtbelag problemlos verpackt, gelagert und transportiert werden kann. Vor dem Einsatz des Sichtbelags kann die Folie bzw. der Belag abgezogen werden und der Sichtbelag in einfacher Weise auf den Untergrund aufgeklebt werden. Auf diese Weise ist das Anbringen des Sichtbelags schnell, einfach und kostengünstig durchführbar.

In Schritt d) des erfindungsgemäßen Verfahrens wird der Verbund aus Oberflächenschicht und Trägerschicht abgehoben, wobei der Sichtbelag erhalten wird.

Praktische Versuche haben gezeigt, dass besonders attraktive Sichtbeläge erhalten werden können, wenn die Oberfläche des Formkörpers vor und/oder nach dem Abheben des Verbunds aus Oberflächenschicht und Trägerschicht beispielsweise mit einer Rakel und/oder Richtlatte glattgezogen wird.

In manchen Fällen hat es sich ferner als zweckmäßig erwiesen, wenn der Sichtbelag beispielsweise durch Verpressen mit oder ohne Wärmeeinwirkung, durch Schleifen, durch Aufbringen einer Versiegelungs- und/oder Schutzschicht, nachbehandelt wird.

Ist eine höhere Kompaktheit des Sichtbelags erwünscht, so ist es von Vorteil, wenn der Formkörper horizontal und/oder vertikal beispielsweise durch Verpressen verdichtet wird. Eine derartige Verdichtung kann prinzipiell zu den verschiedensten Zeitpunkten des erfindungsgemäßen Verfahrens erfolgen. Besonders zweckmäßig ist es, die Verdichtung des Formkörpers nach dem Einbringen des körnigen Materials in die Aufnahme und/oder nach dem Verbinden von Oberflächenschicht und Trägerschicht durchzuführen.

Durch das Verdichten, das vorzugsweise unter Wärmeeinwirkung stattfindet, kann eine deutliche Glättung des Sichtbelags erzielt werden. Wenn erwünscht, kann durch das Verdichten auch eine Formgebung, z.B. zur Ausbildung runder bzw. gebogener Oberflächen erfolgen. Wird kein glattes Erscheinungsbild der Sichtoberfläche gewünscht, kann die Oberfläche des Sichtbelags auch durch Aufrauen bzw. Strukturieren nachbehandelt werden.

Eine Nachbehandlung des Sichtbelags kann auch durch Versiegeln und/oder Aufbringen einer Schutzschicht erfolgen. Mit der Versiegelung kann eine glatte und strapazierfähige Oberfläche geschaffen werden, die, wenn erwünscht, auch gegen das Eindringen von Flüssigkeiten gesichert sein kann.

Wird eine Schutzschicht aufgebracht, so kann diese transparent oder durchscheinend sein. Das Aufbringen der Schutzschicht erfolgt vorzugsweise auf der Oberfläche des Sichtbelags, die der Trägerschicht gegenüber liegt.

Das Aufbringen der Schutzschicht kann unter Anwendung jedes der üblichen Verfahren zum Aufbringen einer Schutzschicht auf die Oberfläche eines Materials erfolgen. Zu diesen Verfahren gehören beispielsweise das Aufsprühen einer Lösung oder einer Dispersion eines Polymers oder Vorpolymers auf die Oberfläche des Materials, das Auftragen eines Polymers oder Vorpolymers auf die Oberfläche des Materials mittels konventioneller Beschichtungseinrichtungen, wie z.B. einer gegenläufigen Beschichtungswalze, einer Rakel usw.

Vorzugsweise dringt das Polymer der Schutzschicht zumindest in einen Teil der Oberfläche des Sichtbelags ein und/oder imprägniert diesen. Hierfür eignen sich insbesondere Polymere, die für die Außenanwendung geeignet sind. Zu derartigen wetterfesten Polymeren gehören Fluorpolymere, Acrylatpolymere, Urethanpolymere, Vinylpolymere und Mischungen sowie Copolymere dieser Polymere. Zu den Fluorpolymeren, die bei der Realisierung der Erfindung nützlich sind, gehören Polymere und Copolymere, die hergestellt sind aus Trifluorethylen, Tetrafluorethylen,. Hexafluorpropylen, Monochlortrifluorethylen und Dichlordifluorethylen. Copolymere dieser Monomere, die unter Verwendung von Fluorolefinen, wie z.B. Vinylidenfluorid hergestellt werden, sind ebenfalls brauchbar. Zu weiteren erläuternden Beispielen hinsichtlich der Fluorpolymere, die für die Realisierung der vorliegenden Erfindung nützlich sind, gehören Polyvinylfluorid und Polyvinylidenfluorid. Das Fluorpolymer kann ein fluoriniertes Ethylen/Propylen-Copolymer sein oder ein Copolymer aus Ethylen und Chlortrifluorethylen. Vinylidenfluorid/Hexafluorpropen und Vinylidenfluorid/ Perfluoro(Alkylvinyläther)-tripolymere und -terpolymere mit Tetrafluorethylen sind weitere beispielhafte Fluorpolymere, die für die Realisierung der vorliegenden Erfindung nützlich sind.

Auf die Topographie des Sichtbelags kann auf verschiedene Arten und Weisen Einfluss genommen werden. Gemäß einer bevorzugten Ausführungsform der Erfindung wird auf die Topographie des Sichtbelags dadurch Einfluss genommen, dass die nicht gebundenen Anteile des körnigen Materials in definierten Zeiträumen nach dem Abheben des Verbunds aus Oberflächenschicht und Trägerschicht entfernt werden.

Wird beispielsweise der nicht gebundene Anteil des körnigen Materials unmittelbar nach Abheben des Verbunds entfernt, so kann ein Sichtbelag mit relativ glatter Oberfläche, d.h. niedriger Topographie erhalten werden.

Ist dagegen eine strukturierte Sichtoberfläche erwünscht, so wird in einer weiteren bevorzugten Ausführungsform der Erfindung der nicht gebundene Anteil des körnigen Materials erst nach einem definierten Zeitraum nach dem Abheben des Sichtbelags entfernt. Auf diese Weise kann auch derjenige Anteil an körnigem Material in den Sichtbelag eingebunden werden, der lediglich eine geringe Berührungsoberfläche mit dem Bindemittel bzw. Klebstoff hat. Mit dieser Ausführungsform kann ein Sichtbelag mit einer strukturierten Topographie hergestellt werden.

Der mit dem erfindungsgemäßen Verfahren hergestellte Sichtbelag eignet sich hervorragend für die verschiedensten Einsatzzwecke, beispielsweise zur Bekleidung von Decken, Wänden, Fußböden, Türen und/oder Dächern. Ebenfalls hervorragend geeignet ist der mit dem erfindungsgemäßen Verfahren hergestellte Sichtbelag als Bekleidung bzw. integraler Bestandteil von Möbeln, insbesondere von Tischplatten. Darüber hinaus kann der Sichtbelag auch als eigenständiges Verbundelement beispielsweise in Verbindung mit Glas auf Trägermaterialien eingesetzt werden. Optisch besonders ansprechende Ergebnisse können erzielt werden, wenn der erfindungsgemäße Sichtbelag über ein Klebemittel mit einer Glasplatte innig verbunden wird. Das Klebemittel ist hierbei vorzugsweise durchsichtig.

Der erfindungsgemäße Sichtbelag besitzt, obwohl seine Oberflächenschicht im Vergleich zu üblicherweise verwendeten massiven Materialien, wie beispielsweise Sandstein, nur relativ dünn ist, das Aussehen des Steinmaterials selbst. Darüber hinaus ist der Sichtbelag flexibel und kann aus diesem Grund erheblichen Biege- und Zugbelastungen widerstehen. Aufgrund seiner Flexibilität kann der Sichtbelag ferner auch auf unebenen bzw. veränderlichen Oberflächen eingesetzt werden, um eine dekorative Oberfläche zu schaffen.

Darüber hinaus ist der erfindungsgemäße Sichtbelag im Vergleich zu herkömmlichen Materialien relativ leicht, so dass er auch auf weniger stabilen Untergründen aufgebracht werden kann. Es entfällt somit die Notwendigkeit für die Schaffung einer formstabilen Basisschicht. Zusätzlich ist der Sichtbelag einfach und schnell zu verlegen bzw. zu verarbeiten.

Als Untergrund für den erfindungsgemäßen Sichtbelag eignen sich die verschiedensten Materialien, wie beispielsweise Holzwerkstoffe, Kunststoffe, Beton, Estrich, Putz, Dämmmaterialien, Gips, Gipsfaser, Metall und ähnliche Materialien.

Die Dicke des Sichtbelags kann in Abhängigkeit von dem erwünschten Einsatzzweck in weiten Bereichen variieren. Praktische Versuche haben ergeben, dass mit Dicken von 0,005 mm bis 1 cm, vorzugsweise von 0,01 mm bis 5 mm, insbesondere von 0,05 mm bis 3 mm besonders gute Ergebnisse erzielt werden. Wie bereits diskutiert, kann die Einstellung der Dicke beispielsweise durch die Abmessungen der Aufnahme sowie durch die Variierung der Auftragsmenge und/oder Viskosität des Bindemittels gesteuert werden.

Gemäß einer weiteren bevorzugten Ausgestaltung der Erfindung wird mindestens ein Platzhalter in die Aufnahme und/oder in das körnige Material eingebracht wird. Als Platzhalter können Gegenstände der verschiedensten Formen und Materialen eingesetzt werden. Im weiteren Verfahren können die Platzhalter im gebildeten Formkörper verbleiben und/oder aus ihm entfernt werden. Verbleibt der Platzhalter im Formkörper ist es zweckmäßig optisch dekorative Materialien, beispielsweise Muscheln, Steine usw. einzusetzen. Soll der Platzhalter aus dem Formkörper entfernt werden, ist es besonders zweckmäßig dies vor dem Verbinden von Oberflächenschicht und Trägerschicht zu tun. Die bei dem Entfernen des Platzhalters gebildete Ausnehmung kann wie bereits oben beschrieben mit einem Kontrastmittel verfüllt werden. Mit dieser erfindungsgemäßen Variante können äußerst attraktive Sichtbeläge erhalten werden.

Im Folgenden wird die Erfindung anhand eines in einer Zeichnung dargestellten Ausführungsbeispiels näher erläutert. Es zeigen:
- Fig. 1:: Den Einfüllvorgang des mit dem Stabilisierungsmittel vermengten körnigen Materials in die Aufnahme
- Fig. 2:: Die Ausbildung einer Ausnehmung im Formkörper durch Veränderung der räumlichen Lage des Formkörpers
- Fig.3:: Die Ausbildung einer Ausnehmung im Formkörper durch Eindrücken eines Eindrückkörpers
- Fig.4:: Die Verfüllung einer Ausnehmung mit einem Kontrastmittel
- Fig.5:: Das Abheben eines Verbunds aus Oberflächenschicht des Formkörpers und einer Trägerschicht unter Bildung des erfindungsgemäßen Sichtbelags
- Fig.6:: Ein Fliesschema für eine mögliche Abfolge von Verfahrensschritten zur Herstellung des erfindungsgemäßen Sichtbelags

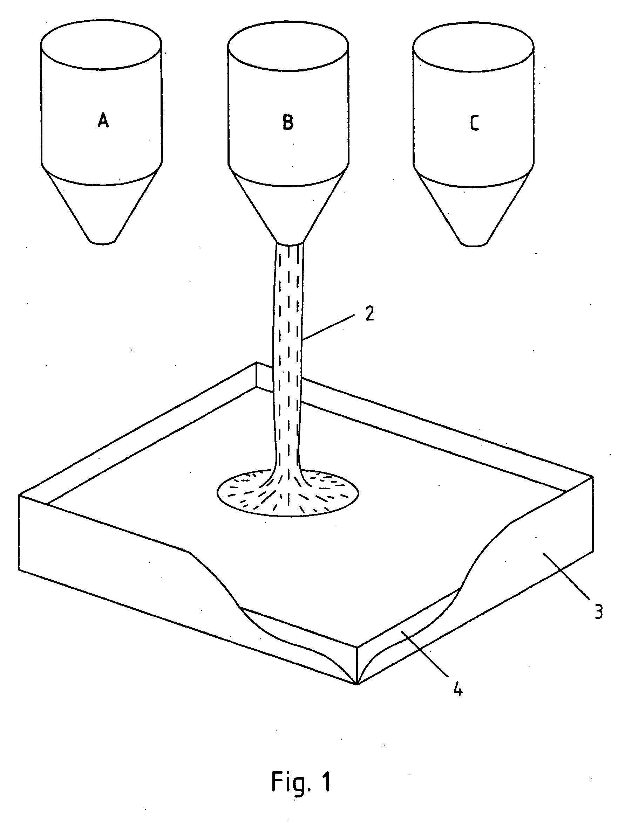

In Figur 1 wird ein Verfahrensschritt zur Herstellung des erfindungsgemäßen Sichtbelags 1 verdeutlicht. Aus einem Vorratsbehälter (B) wird ein körniges Material 2 in eine Aufnahme 3 geschüttet, wobei sich ein Formkörper 4 ausbildet. Im vorliegenden Fall liegt das körnige Material 2 bereits vor dem Einfüllen mit einem Stabilisierungsmittel vermengt vor. Das Vermengen von körnigem Material und Stabilisierungsmittel kann jedoch auch erst zu einem späteren Zeitpunkt, beispielsweise in der Aufnahme 3, erfolgen. Zu diesem Zweck kann das Stabilisierungsmittel getrennt von dem körnigen Material 2 beispielsweise aus einem weiteren Vorratsbehälter (B) in die Aufnahme 3 eingebracht werden. Das körnige Material 2 und/oder das Stabilisierungsmittel können ferner Additive enthalten. Diese können entweder gemeinsam mit dem körnigen Material 2 und/oder dem Stabilisierungsmittel in die Aufnahme 3 eingefüllt werden. Die Additive können aber auch separat beispielsweise über den Vorratsbehälter (C) eingebracht werden.

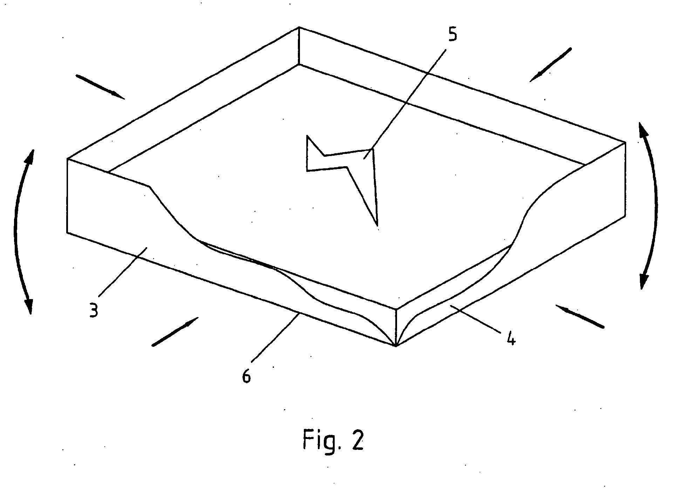

In Figur 2 ist dargestellt wie sich durch ein Veränderung der räumlichen Lage des Formkörpers 4 eine Ausnehmung 5 ausbildet. Hierbei verdeutlichen die gebogenen Pfeile ein seitliches Anheben einer flexiblen Bodenfläche 6 der Aufnahme 3.

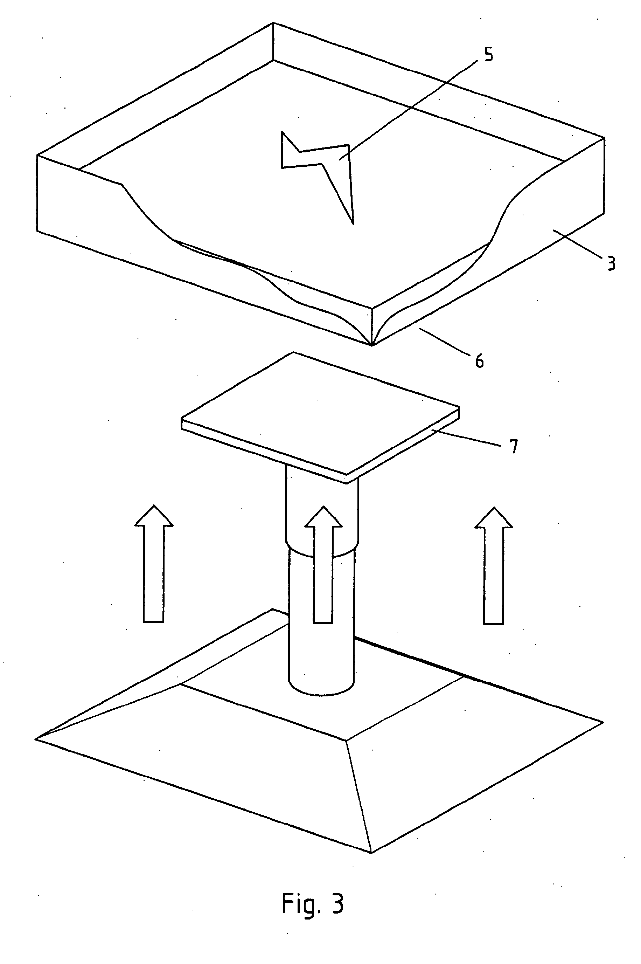

In Figur 3 ist dargestellt wie eine Ausnehmung 5 durch Eindrücken eines Eindrückkörpers 7 in eine flexible Bodenfläche 6 der Aufnahme 3 ausgebildet wird.

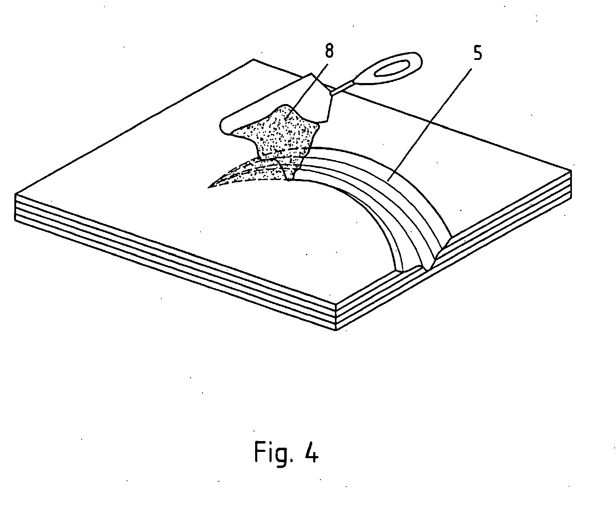

In Figur 4 ist dargestellt wie eine Ausnehmung 5 mit einem Kontrastmittel 8 verfüllt wird.

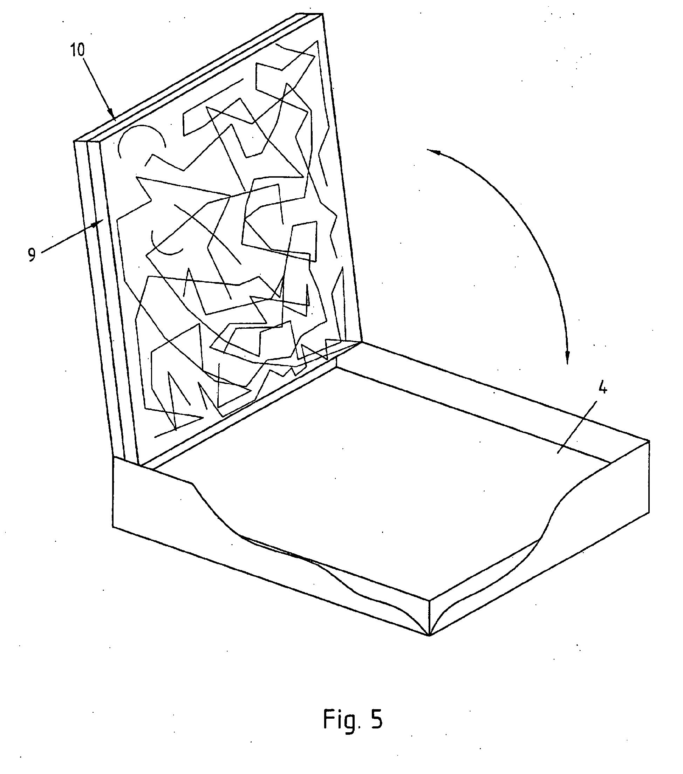

In Figur 5 ist dargestellt wie durch Abheben eines Verbunds aus einer Oberflächenschicht 9 des Formkörpers 4 und einer Trägerschicht 10 ein erfindungsgemäßer Sichtbelag 1 erhalten wird.

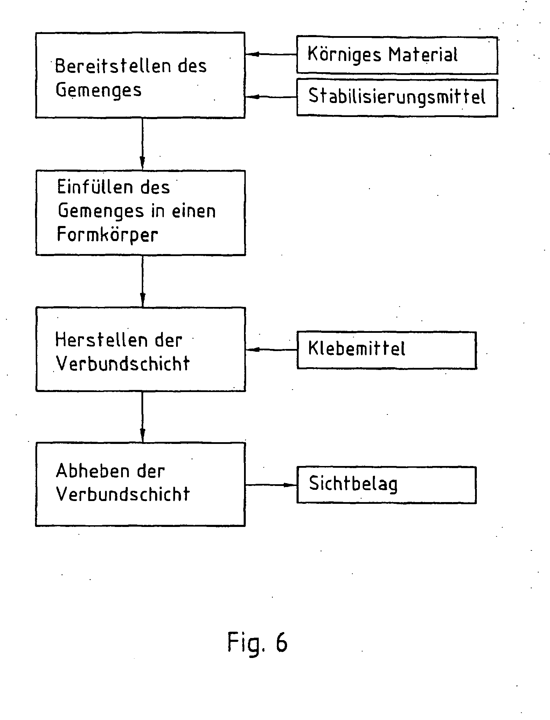

Das Fliesschema in Figur 6 verdeutlicht eine mögliche Abfolge von Verfahrensschritten zur Herstellung des erfindungsgemäßen Sichtbelags 1.

## Patentansprüche

1. Verfahren zum Herstellen eines Sichtbelags (1) umfassend folgende Schritte:
a) Vermengen eines schwachen Stabilisierungsmittels, ausgewählt aus Wasser, Quellton, Methylcellulose, Polysaccharide, Polyvinylalkohol, Kasein, Lehm, Saponite, Sephiolit, China-clay, Zinkoxid und/oder Wasserglas mit einem körnigen Material (2), ausgewählt aus Naturstein, vorzugsweise Quarz, Quarzsand, Sandstein, Granit, Schiefer, Marmor, Tuffstein, Glas, Kunststoff, Holz und/oder Metall;
b) Einfüllen des körnigen Materials (2) in eine Aufnahme (3) unter Ausbildung eines Formkörpers (4),
c) Ausbilden mindestens einer Ausnehmung (5) in dem Formkörper (4);
d) Verfüllen zumindest eines Teils der Ausnehmung (5) mit einem Kontrastmittel (8), wobei sich ein künstliches Strukturmuster ausbildet;
e) Verbinden mindestens einer Oberflächenschicht (9) des Formkörpers (4) mit einer Trägerschicht (10), ausgewählt aus Gewebe, ein Vlies und/oder ein Gewirke;
f) Abheben des Verbunds aus Oberflächenschicht (9) und Trägerschicht (10), wobei der Sichtbelag (1) erhalten wird.

2. Verfahren nach Anspruch 1, **dadurch gekennzeichnet, dass** als körniges Material (2) ein Granulat eingesetzt wird.

3. Verfahren nach einem der Ansprüche 1 bis 2, **dadurch gekennzeichnet, dass** als körniges Material (2) ein Granulat mit einem D₅₀ Wert von 0,02 mm bis 1 mm und/oder einer mittleren Korngröße von 0,1 mm bis 1,5 mm eingesetzt wird.

4. Verfahren nach einem der Ansprüche 1 bis 3, **dadurch gekennzeichnet, dass** das körnige Material (2) ein Brandschutzadditiv, ein Hydrophobierungsmittel, ein Geruchssadsorbens, ein Schadstoffadsorbens, ein Verstärkungsmaterial und/oder ein Färbemittel enthält.

5. Verfahren nach einem der Ansprüche 1 bis 4, **dadurch gekennzeichnet, dass** als Stabilisierungsmittel, Wasser, Cellulose, Stärke, Saccharid, Polyvinylalkohol, Kasein, Wasserglas, Lehm, Saponite, Sephiolit, China-clay, Zinkoxid und/oder Quellton eingesetzt wird.

6. Verfahren nach Anspruch 5, **dadurch gekennzeichnet, dass** die Ausnehmung (5) in dem Formkörper (4) durch eine Veränderung der räumlichen Stellung des Formkörpers (4) ausgebildet wird.

7. Verfahren nach Anspruch 6, **dadurch gekennzeichnet, dass** die Veränderung der räumlichen Stellung des Formkörpers (4) durch punktuelles, vorzugsweise einseitiges, Anheben der Bodenfläche (6) der Aufnahme (3) erfolgt.

8. Verfahren nach einem der Ansprüche 5 bis 7, **dadurch gekennzeichnet, dass** die Ausnehmung (5) in dem Formkörper (4) durch eine Verformung der Bodenfläche (6) der Aufnahme (3) und/oder durch eine Verformung einer zwischen Bodenfläche (6) der Aufnahme (3) und Formkörper (4) angeordneten Folie gebildet wird.

9. Verfahren nach Anspruch 8, **dadurch gekennzeichnet, dass** die Verformung der Bodenfläche (6) durch Eindrücken eines Eindrückkörpers (7) durchgeführt wird.

10. Verfahren nach einem der Ansprüche 5 bis 9, **dadurch gekennzeichnet, dass** ein Kontrastmittel (8) eingesetzt wird, das sich in Sieblinienaufbau, Korngröße, Farbe, Struktur und/oder Zusammensetzung von dem körnigen Material (2) unterscheidet.

11. Verfahren nach einem der Ansprüche 1 bis 10, **dadurch gekennzeichnet, dass** eine Aufnahme (3) eingesetzt wird, dessen Bodenfläche (6) verformbar ist.

12. Verfahren nach einem der Ansprüche 1 bis 11, **dadurch gekennzeichnet, dass** eine Aufnahme (3) eingesetzt wird, deren Bodenfläche (6) aus Metall oder einem elastischem Kunststoff, vorzugsweise Polyurethan, Polyvinylchlorid, und/oder Silicon besteht.

13. Verfahren nach einem der Ansprüche 1 bis 12, **dadurch gekennzeichnet, dass** eine Aufnahme (3) eingesetzt wird, die eine Verstärkungseinlage und/oder Füllstoffe enthälz.

14. Verfahren nach einem der Ansprüche 1 bis 13, **dadurch gekennzeichnet, dass** eine Aufnahme (3) eingesetzt wird, auf deren Wänden und/oder Bodenfläche (6) eine Folie, insbesondere aus Latex, Polyisobutylen, Polyethylen, Silikon, Polyurethan und/oder Urea als Trenn- und/oder Gleitschicht angeordnet ist.

15. Verfahren nach einem der Ansprüche 1 bis 14, **dadurch gekennzeichnet, dass** eine Aufnahme (3) eingesetzt wird, deren Bodenfläche (6) in Richtung der Füllrichtung anhebbar ist.

16. Verfahren nach einem der Ansprüche 1 bis 15, **dadurch gekennzeichnet, dass** eine poröse und/oder flexible Trägerschicht (10) eingesetzt wird.

17. Verfahren nach einem der Ansprüche 1 bis 16, **dadurch gekennzeichnet, dass** das Verbinden von Oberflächenschicht (9) und Trägerschicht (10) mit einem Klebstoff und/oder einem Bindemittel durchgeführt wird.

18. Verfahren nach einem der Ansprüche 1 bis 17, **dadurch gekennzeichnet, dass** auf die der Oberflächenschicht (9) abgewandte Seite der Trägerschicht (10) eine Versteifungsschicht aufgebracht wird.

19. Verfahren nach Anspruch 21, **dadurch gekennzeichnet, dass** als Versteifungsschicht eine Span- und/oder MDF-Platte eingesetzt wird.

20. Verfahren nach einem der Ansprüche 1 bis 19, **dadurch gekennzeichnet, dass** die Oberfläche des Formkörpers (4) vor und/oder nach dem Abheben des Verbunds aus Oberflächenschicht (9) und Trägerschicht (10) glattgezogen wird.

21. Verfahren einem der Ansprüche 1 bis 20, **dadurch gekennzeichnet, dass** der Sichtbelag (1) durch Verpressen und/oder Schleifen, durch Aufbringen einer Versiegelungsschicht und/oder durch Aufbringen einer Schutzschicht nachbehandelt wird.

22. Verfahren einem der Ansprüche 1 bis 21, **dadurch gekennzeichnet, dass** mindestens ein Platzhalter in die Aufnahme (3) und/oder in das körnige Material eingebracht wird.

23. Sichtbelag (1), hergestellt mit einem Verfahren nach einem oder mehreren der Ansprüche 1 bis 19.

24. Verwendung eines Sichtbelags (1) nach Anspruch 23 als Bekleidung von Decken, Wänden, Fußböden, Türen, Dächern, Möbeln, insbesondere Tischplatten.

## Claims

1. Method for producing a visible coating (1) comprising the following steps:
a) Mixing a weak stabiliser selected from water, swelling clay, methyl cellulose, polysaccharide, polyvinyl alcohol, casein, clay, saponite, china clay, zinc oxide and/or water glass with a granular material (2), selected from natural stone, preferably quartz, quartz sand, sand stone, granite, slate, marble, tuff, glass, plastics, wood and/or metal;
b) Filling the granular material (2) into a receptacle (3) to form a moulded article (4);
c) Forming at least one recess (5) in the moulded article (4);
d) Filling at least one part of the recess (5) with a contrast agent (8), wherein a plastic structural pattern forms;
e) Joining at least one surface layer (9) of the moulded article (4) to a carrier layer (10), selected from woven fabric, nonwoven fabric and/or knitted fabric;
f) Lifting off the compound from the surface layer (9) and the carrier layer (10), wherein the visible coating (1) is obtained.

2. Method according to Claim 1, **characterised in that** a granulate is used as granular material (2).

3. Method according to Claim 1 or 2, **characterised in that** the a granulate having a D₅₀ value of 0.02 mm to 1 mm and/or an average grain size of 0.1 mm to 1.5 mm is used as the granular material (2).

4. Method according to any one of Claims 1 to 3, **characterised in that** the granular material (2) contains a fire retardant additive, a hydrophobing agent, an odour absorber, a pollutant absorber, a reinforcing material and/or a colourant.

5. Method according to any one of Claims 1 to 4, **characterised in that** water, cellulose, starch, saccharide, polyvinyl alcohol, casein, water glass, clay, saponite, sepiolite, chine clay, zinc oxide and/or swelling clay is used as a stabiliser.

6. Method according to Claim 5, **characterised in that** the recess (5) in the moulded article (4) is formed by changing the spatial position of the moulded article (4).

7. Method according to Claim 6, **characterised in that** changing the spatial position of the moulded article (4) takes place by selective, preferably unilateral lifting of the bottom area (6) of the receptacle (3).

8. Method according to any one of Claims 5 to 7, **characterised in that** the recess (5) in the moulded article (4) is formed by deforming the bottom area (6) of the receptacle (3) and/or by deforming a film arranged between the bottom area (6) of the receptacle (3) and the moulded article (4).

9. Method according to Claim 8, **characterised in that** deforming the bottom area (6) is carried out by pushing in an indenter (7).

10. Method according to any one of Claims 5 to 9, **characterised in that** a contrast agent (8) is used which differs from the granular material (2) in the structure of the grading curve, grain size, colour, structure and/or composition.

11. Method according to any one of Claims 1 to 10, **characterised in that** a receptacle (3) is used, the bottom area (6) of which is deformable.

12. Method according to any one of Claims 1 to 11, **characterised in that** a receptacle (3) is used, the bottom area (6) of which consists of metal or a resilient plastic, preferably polyurethane, polyvinyl chloride and/or silicon.

13. Method according to any one of Claims 1 to 12, **characterised in that** a receptacle (3) is used, which contains a reinforcing insert and/or filler material.

14. Method according to any one of Claims 1 to 13, **characterised in that** a receptacle (3) is used, on the walls and/or bottom area (6) of which a film, in particular consisting of latex, polyisobutylene, polyethylene, silicon, polyurethane and/or urea is arranged as a separating and/or sliding layer.

15. Method according to any one of Claims 1 to 14, **characterised in that** a receptacle (3) is used, the bottom area (6) of which can be lifted towards the filling direction.

16. Method according to any one of Claims 1 to 15, **characterised in that** a porous and/or flexible carrier layer (10) is used.

17. Method according to any one of Claims 1 to 16, **characterised in that** joining the surface layer (9) to the carrier layer (10) is carried out using an adhesive and/or a binder.

18. Method according to any one of Claims 1 to 17, **characterised in that** a reinforcing layer is applied to the side of the carrier layer (10) facing away from the surface layer (9).

19. Method according to Claim 21, **characterised in that** a chipboard and/or MDF board is used as a reinforcing layer.

20. Method according to any one of Claims 1 to 19, **characterised in that** the surface of the moulded article (4) is smoothed before and/or after lifting off the compound from the surface layer (9) and the carrier layer (10).

21. Method according to any one of Claims 1 to 20, **characterised in that** the visible coating (1) is post-treated by pressing and/or grinding, by applying a sealing layer and/or by applying a protective layer.

22. Method according to any one of Claims 1 to 21, **characterised in that** at least one place holder is inserted into the receptacle (3) and/or into the granular material.

23. Visible coating (1), produced by means of a method according to any one of or a plurality of Claims 1 to 19.

24. Use of a visible coating (1) according to Claim 23 as a covering for ceilings, walls, floor boards, door, roofs, furniture, in particular table tops.

## Revendications

1. Procédé de fabrication d'un revêtement apparent (1), qui comprend les étapes suivantes :
a) mélange d'un faible agent stabilisant, choisi à partir d'eau, d'argile gonflante, de cellulose méthylique, de polysaccharides, d'alcool polyvinylique, de caséine, de terre glaise, de saponite, de sépiolite, d*argile de Chine, d'oxyde de zinc et / ou de verre soluble, avec un matériau granuleux (2), choisi à partir de pierre naturelle, de préférence de quartz, de sable siliceux, de grès, de granit, d'ardoise, de marbre, de trass, de verre, de matière synthétique, de bois et / ou de métal;
b) remplissage d'un réceptacle (3) avec le matériau granuleux (2) en formant un corps façonné (4),
c) formage d'eau moins un évidement (5) dans le corps façonné (4);
d) remplissage d'au moins une partie de l'évidement (5) avec un agent de contraste (8), sachant que se forme un motif structuré, artificiel;
e) liaison d'eau moins une couche superficielle (9) du corps façonné (4) à une couche de support (10), choisie à partir de tissu, de non-tissé et / ou de tissu à mailles;
f) enlèvement du composite formé par la couche superficielle (9) et la couche de support (10), le revêtement apparent (1) étant obtenu.

2. Procédé selon la revendication 1, **caractérisé en ce que**, comme matériau granuleux (2), on utilise un granulé.

3. Procédé selon l'une des revendications 1 à 2, **caractérisé en ce que**, comme matériau granuleux (2), on utilise un granulé, qui présente une valeur D₅₀ de 0,02 mm à 1 mm et / ou une granulométrie moyenne de 0,1 à 1,5 mm.

4. Procédé selon l'une des revendications 1 à 3, **caractérisé en ce que** le matériau granuleux (2) contient un additif d'ignifugation, un agent imperméabilisant, un agent de désodorisation, un agent absorbeur de substances nocives, un matériau de renforcement et / ou un agent colorant.

5. Procédé selon l'une des revendications 1 à 4, **caractérisé en ce que**, comme agent stabilisant, on utilise de l'eau, de la cellulose, de l'amidon, de la saccharide, de l'alcool polyvinylique, de la caséine, de la terre glaise, de la saponite, de la sépiolite, de l'argile de Chine, de l'oxyde de zinc et / ou de l'argile gonflante.

6. Procédé selon la revendication 5, **caractérisé en ce que** l'évidement (5) est formé dans le corps façonné (4) par une modification dans l'espace de la position du corps façonné (4).

7. Procédé selon la revendication 6, **caractérisé en ce que** la modification dans l'espace de la position du corps façonné (4) est effectuée par soulèvement ponctuel, de préférence d'un seul côté, de la surface (6) du fond du réceptacle (3).

8. Procédé selon l'une des revendications 5 à 7, **caractérisé en ce que** l'évidement (5) est formé dans le corps façonné (4) par une déformation de la surface du fond (6) du réceptacle (3) et / ou par une déformation d'une feuille, qui est disposée entre la surface (6) du fond du réceptacle (3) et le corps façonné (4).

9. Procédé selon la revendication 8, **caractérisé en ce que** la déformation de la surface du fond (6) est effectuée par pression d'un corps pénétrateur (7).

10. Procédé selon l'une des revendications 5 à 9, **caractérisé en ce que** l'on utilise un agent de contraste (8), qui diffère du matériau granuleux (2) de par la courbe de tamisage, la granulométrie, la couleur, la structure et / ou la composition.

11. Procédé selon l'une des revendications 1 à 10, **caractérisé en ce qu'**est prévu un réceptacle (3), dont la surface de fond (6) est déformable.

12. Procédé selon l'une des revendications 1 à 11, **caractérisé en ce qu'**est prévu un réceptacle (3), dont la surface de fond (6) est en métal ou en matière synthétique, élastique, de préférence en polyuréthane, en chlorure de polyvinyle et / ou en silicone.

13. Procédé selon l'une des revendications 1 à 12, **caractérisé en ce qu'**est prévu un réceptacle (3), qui contient un insert de renforcement et / ou des matières de charge.

14. Procédé selon l'une des revendications 1 à 13, **caractérisé en ce qu'**est prévu un réceptacle (3) sur les parois et / ou sur la surface de fond (6) duquel est disposée, en tant que couche de séparation et / ou de glissement, une feuille, en particulier en latex, en polyisobutylène, en polyéthylène et / ou en urée.

15. Procédé selon l'une des revendications 1 à 14, **caractérisé en ce qu'**est prévu un réceptacle (3) dont la surface de fond (6) peut être soulevée dans la direction de remplissage.

16. Procédé selon l'une des revendications 1 à 15, **caractérisé en ce que** l'on utilise une couche de support (10) poreuse et / ou flexible.

17. Procédé selon l'une des revendications 1 à 16, **caractérisé en ce que** la liaison entre la couche superficielle (9) et la couche de support (10) est effectuée au moyen d'une colle ou d'un liant.

18. Procédé selon l'une des revendications 1 à 17, **caractérisé en ce que**, sur la face de la couche de support (10), opposée à la couche superficielle (9), est appliquée une couche de raidissement.

19. Procédé selon la revendication 18, **caractérisé en ce que**, comme couche de raidissement, on utilise une plaque de copeaux agglomérés et / ou de MDF.

20. Procédé selon l'une des revendications 1 à 19, **caractérisé en ce que** la surface du corps façonné (4) est lissé, avant et / ou après l*enlèvement du composite formé par la couche superficielle (9) et la couche de support (10).

21. Procédé selon l'une des revendications 1 à 20, **caractérisé en ce que** le revêtement apparent (1) est traité ultérieurement par compression et / ou par rectification, par application d'une couche de scellage et / ou par application d'une couche de protection.

22. Procédé selon l'une des revendications 1 à 21, **caractérisé en ce qu'**au moins un élément de réservation est inséré dans le réceptacle (3) et / ou dans le matériau granuleux.

23. Revêtement apparent (1) fabriqué par un procédé selon l'une ou plusieurs des revendications 1 à 19.

24. Utilisation d'un revêtement apparent (1) selon la revendication 23 en tant que revêtement de plafonds, de murs, de sols, de portes, de toits, de meubles, en particulier de dessus de tables.
